# EUROPÄISCHE PATENTANMELDUNG

(11) **EP 0 922 679 A1**
(43) Veröffentlichungstag der Anmeldung: **16.06.1999**
(21) Anmeldenummer: 97810971.8
(22) Anmeldetag: 11.12.1997
(51) Int. Cl.: C03B 19/08, C03C 11/00, C04B 5/06, C21B 3/06

(54) **Verfahren zum Schäumen von Material, insbesondere Schlacke oder Glas**

(71) Anmelder: Asea Brown Boveri AG, 5401 Baden (CH)
(72) Erfinder: Rüegg, Hans, 5610 Wohlen (CH); Stoffel, Beat, Dr., 8126 Zumikon (CH)
(74) Vertreter: Pöpper, Evamaria, Dr.

(57) **Zusammenfassung**

Bei einem Verfahren zum Schäumen von Material (2), insbesondere Schlacke oder Glas, bei welchem das Material (2) direkt im geschmolzenen Zustand unter Verwendung eines Blähmittels (3) aufgeschäumt wird, werden das geschmolzene Material (2) und ein pulverförmiges Blähmittel (3) einem dreh- und/oder schwenkbaren Behandlungsgefäss (1), vorzugsweise einem Drehrohrofen, zugeführt. Das Blähmittel wird oberflächlich verteilt und allein durch Bewegung des Behandlungsgefässes (1) intensiv mit dem flüssigen Material (2) vermischt. Das Material (2) wird infolge Gasentwicklung aufgeschäumt wird und anschliessend als aufgeschäumtes Produkt (11) aus dem Behandlungsgefäss (1) ausgetragen und abgekühlt. Das auf diese Weise aufgeschäumte Produkt (11) enthält feinstverteilte geschlossenen Poren und ist daher gut als Bau- und Isolierstoff einsetzbar.

## Beschreibung

### Technisches Gebiet

Die Erfindung betrifft ein Verfahren zum Schäumen von Material, insbesondere Schlacke oder Glas, wobei das geschäumte Produkt direkt, d. h. ohne vorherige Abkühlung und Erstarrung, aus dem geschmolzenen Material gebildet wird.

### Stand der Technik

Es sind zahlreiche Verfahren zur Erzeugung von Schaumprodukten aus beispielsweise Glas bekannt, die auch grosstechnisch angewendet werden.

So wird z. B. bei einem bekannten Verfahren ein gemahlenes Glas mit einem Blähmittel vermischt. Anschliessend wird diese Mischung auf Temperaturen im Bereich der Schmelztemperatur des Glases erhitzt, wobei sich die Blähmittel entweder unter Entwicklung von gasförmigen Komponenten, wie beispielsweise O₂, CO₂, SO₂, zersetzen oder unter Entwicklung von gasförmigen Reaktionsprodukten mit der Atmosphäre und dem Glas reagieren. Das Glas wird durch die Bildung des Gases aufgeschäumt (s. S. Köse und G. Bayer: Die Schaumbildung im System Altglas - SiC und Eigenschaften derartiger Schaumgläser. Glastechn. Berichte 55, 1982, Heft 7, S. 151-160). Nachteilig an diesem Verfahren sind die hohen Herstellungskosten.

Bei einem anderen aus der Eisenindustrie bekannten Verfahren wird Eisenhüttenschlacke direkt aus dem geschmolzenen Zustand aufgeschäumt. Die flüssige Schlacke wird auf eine schräge Rinne geleitet, auf deren Oberseite Wasser zugeführt wird. Unterhalb der Schlacke verdampft auf Grund der hohen Schlackentemperatur das Wasser. Der Wasserdampf bildet in der erstarrenden Schlacke Blasen, so dass ein aufgeschäumtes Produkt (Bimsstein) entsteht. Der Nachteil dieses Verfahrens besteht darin, dass keine geschlossenen gleichmässig verteilte Poren gebildet werden und daher dieses Produkt als Isolations- oder Baustoff nur bedingt einsetzbar ist.

Weiterhin ist ein Verfahren zum Schäumen von schmelzbaren Produkten offenbart, bei dem geschmolzenes Material durch Zerstäuben in einen Strom sehr feiner Tropfen oder Fasern aufgetrennt wird, dieser Strom mit einem Treibmittel vermischt wird und das Materialpartikel/Treibmittelgemisch anschliessend auf einer Oberfläche zu einer Schmelze vereint wird. Das Treibmittel wird durch den Kontakt mit dem geschmolzenen Material erwärmt und setzt dabei Treibgas frei, welches aus der erstarrenden Schmelze einen Materialschaum bildet. Der Nachteil dieses Verfahrens besteht darin, dass die betrieblichen technischen Probleme ein Umsetzen in die Praxis bisher verhindert haben.

### Darstellung der Erfindung

Die Erfindung versucht, die o. g. Nachteile zu vermeiden. Ihr liegt die Aufgabe zugrunde, ein einfaches und kostengünstiges Verfahren zum Schäumen von Material, insbesondere von Schlacke oder Glas, zu entwickeln, das in der Praxis einfach zu realisieren ist und mit dem ein Produkt erhalten wird, das nach dem Erstarren geschlossene Poren aufweist und somit als Bau- und Isolationsmaterial eingesetzt werden kann.

Erfindungsgemäss wird das bei einem Verfahren zum Schäumen von Material, insbesondere Schlacke oder Glas, bei welchem das Material direkt im geschmolzenen Zustand unter Verwendung eines Blähmittels aufgeschäumt wird, dadurch erreicht, dass das geschmolzene Material einem dreh- und/oder schwenkbaren Behandlungsgefäss zugeführt wird, dass dem Behandlungsgefäss ein pulverförmiges Blähmittel zugeführt und dieses oberflächlich verteilt wird, dass das geschmolzene Material und das Blähmittel durch Bewegung des Behandlungsgefässes intensiv miteinander vermischt werden und das Material infolge Gasentwicklung aufgeschäumt wird und das aufgeschäumte Produkt anschliessend aus dem Behandlungsgefäss ausgetragen und abgekühlt wird.

Die Vorteile der Erfindung bestehen darin, dass das aufgeschäumte Material als Bau- und Isolationsstoff eingesetzt werden kann, weil es auf Grund von geschlossenen Poren eine gute Qualität aufweist. Das Verfahren ist einfach und kostengünstig zu realisieren, ein technisch mit vertretbarem Aufwand nicht zu realisierendes Einrühren des pulverförmigen Blähmittels in das schmelzflüssige Material mittels mechanischer Rührvorrichtungen entfällt.

Es ist vorteilhaft, wenn das Blähmittel über eine bestimmte Längendistanz auf der Oberfläche des flüssigen Materials oder auf der Oberfläche der Wand des Behandlungsgefässes verteilt wird. Durch Bewegung des Behandlungsgefässes wird das pulverförmige Blähmittel unter die flüssige Schlacke gezogen, feinst verteilt in die Schlacke eingemischt und bildet durch die Freisetzung eines Gases feinste homogen verteilte geschlossenen Bläschen innerhalb der Schlacke.

Weiterhin ist es zweckmässig, wenn das Blähmittel mittels eines Transportgases dem Behandlungsgefäss zugeführt wird. Das hat den Vorteil, dass das Blähmittel homogen verteilt über die Aufgabelänge aufgegeben werden kann.

Es ist vorteilhaft, wenn als Blähmittel Kohlenstoff oder eine kohlenstoffhaltige Substanz, vorzugsweise Calciumcarbonat eingesetzt wird. Diese Blähmittel setzen bereits bei Temperaturen unter und um den Schmelzbereich der Schlacke durch chemische Reaktion ein Gas, beispielsweise CO₂ frei. Wird Calciumcarbonat als Blähmittel eingesetzt, so zersetzt es sich unter Freisetzung von CO₂, während andere Blähmittel, z. B. Kohle, durch Reaktion mit der Schlacke oder der Atmosphäre Gas freisetzen und das geschmolzene Material aufschäumen.

Von Vorteil ist, wenn bei dem erfindungsgemässen Verfahren als Behandlungsgefäss ein Drehrohrofen verwendet wird. Mit dieser einfachen und robusten Technik wird eine intensive Vermischung von Blähmittel und geschmolzenem Material allein durch die Drehbewegung des Drehrohres erreicht. Gut geeignet als Behandlungsgefäss sind auch eine Schwenktrommel oder ein Konverter.

Schliesslich ist es vorteilhaft, wenn die Vorrichtung zur Zufuhr des Blähmittels zwecks Durchführung des erfindungsgemässen Verfahrens lanzenförmig ausgebildet ist, und die Lanze eine Aussenwand und eine von der Aussenwand beabstandete Innenwand aufweist, wobei die Aussenwand und die Innenwand einen Kühlkanal für ein darin strömendes Kühlmittel begrenzen, und die Innenwand einen Zufuhrkanal für das Blähmittel umschliesst, wobei mindestens ein sich von der Innenwand zur Aussenwand erstreckender Austrittskanal für das Blähmittel vorgesehen ist. Dieser Austrittskanal kann vorzugsweise ein sich in Längsrichtung der Lanze erstreckender Schlitz sein oder es können mehrere in Längsrichtung der Lanze nacheinander angeordneten Röhrchen vorgesehen sein. Mittels dieser Lanze lässt sich das Blähmittel problemlos über eine gewisse Distanz oberflächlich auf dem geschmolzenen Material oder auf der Wand des Behandlungsgefässes verteilen. Eine gleichmässige Einmischung des Blähmittels wird somit gewährleistet, was zu einer hohen Qualität des geschäumten Produktes führt.

### Kurze Beschreibung der Zeichnung

In der Zeichnung sind Ausführungsbeispiele der Erfindung dargestellt.

Es zeigen:
- Fig. 1: eine schematische perspektivische Darstellung eines Drehrohres mit einer ersten Ausführungsvariante der erfindungsgemässen Vorrichtung;
- Fig. 2: einen Schnitt durch den Ofen gemäss Fig. 1 entlang der Linie II-II;
- Fig. 3: eine schematische perspektivische Darstellung eines Drehrohres mit einer zweiten Ausführungsvariante der erfindungsgemässen Vorrichtung;
- Fig. 4: eine schematische Darstellung eines Schwenktrommelofens als dritte Ausführungsvariante der Erfindung;
- Fig. 5: eine schematische Darstellung eines Konverters als vierte Ausführungsvariante der Erfindung.

Es sind nur die für das Verständnis der Erfindung wesentlichen Elemente gezeigt. Nicht dargestellt ist beispielsweise die Beschickungseinrichtung für das Behandlungsgefäss. Die Strömungsrichtung der Medien ist mit Pfeilen bezeichnet.

### Weg zur Ausführung der Erfindung

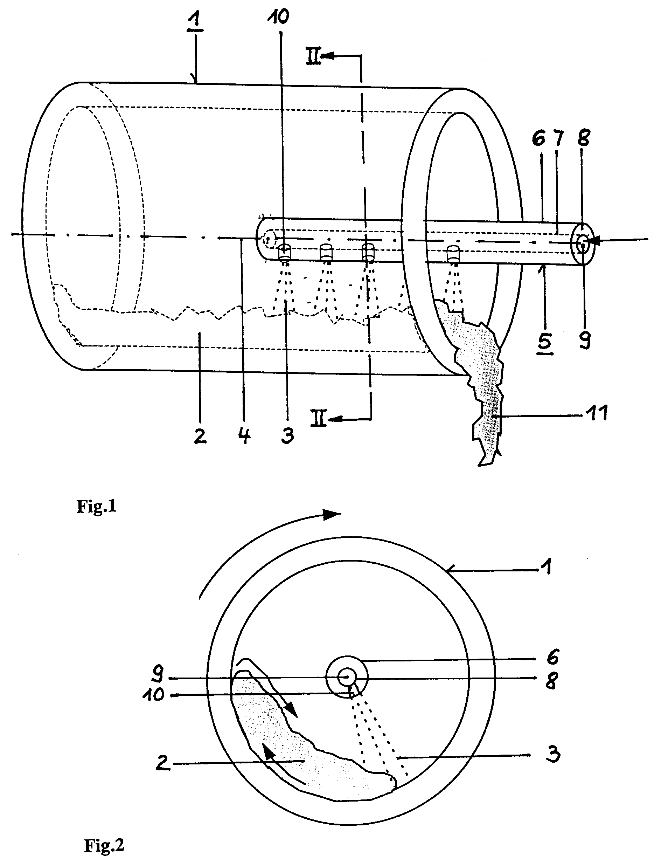

Nachfolgend wird die Erfindung anhand von Ausführungsbeispielen und der Fig. 1 bis 5 näher erläutert.

Fig. 1 zeigt eine schematische perspektivische Darstellung eines Behandlungsgefässes 1, in welchem gemäss der vorliegenden Erfindung geschmolzenes Material 2 mit Blähmittel 3 gemischt und aufgeschäumt wird, während Fig. 2 einen Schnitt entlang der Linie II-II in Fig. 1 darstellt. Beide Figuren beziehen sich auf ein erstes Ausführungsbeispiel und sind daher gleichzeitig bei der folgenden Beschreibung heranzuziehen.

Das dreh- und/oder schwenkbare Behandlungsgefäss 1 ist in diesem ersten Ausführungsbeispiel ein aus dem Stand der Technik bekannter Drehrohrofen 1, welcher in Förderrichtung des geschmolzenen Materials 2 geneigt angeordnet ist und welcher sich während des Betriebes um seine Längsachse 4 dreht. An dem der Aufgabe des geschmolzenen Materials 2 entgegengesetzten Ende des Drehrohrofens 1 ragt mittig in den Drehrohrofen 1 über eine gewisse Längendistanz des Drehrohrofens 1 eine Vorrichtung 5 zur Zufuhr des Blähmittels 3 hinein. Die Vorrichtung 5 kann in einem anderen Ausführungsbeispiel auch vom Zentrum entfernt, d. h. nicht mittig, in das Behandlungsgefäss 1 hineinragen. Die Vorrichtung 5 ist lanzenförmig ausgebildet. Sie hat eine Aussenwand 6 und eine Innenwand 7, welche einen Kühlkanal 8 begrenzen, in dem ein hier nicht dargestelltes Kühlmittel zur Kühlung der Lanze 5 entlangströmen kann. Die Innenwand 7 umschliesst einen Zufuhrkanal 9 für das Blähmittel 3. Der Zufuhrkanal 9 steht über mindestens einen Austrittskanal 10, der sich von der Innenwand 7 zur Aussenwand 6 erstreckt, mit dem Innenraum des Drehrohrofens 1 in Verbindung. Im ersten Ausführungsbeispiel sind als Austrittskanäle 10 mehrere in Längsrichtung der Lanze 5 nacheinander angeordnete Röhrchen vorgesehen.

Als geschmolzenes Material 2 wird im ersten Ausführungsbeispiel geschmolzene Schlacke verwendet, die in einem vorangehenden Prozess, beispielsweise bei der Verbrennung von Hausmüll, erzeugt wird. Die geschmolzene Schlacke 2 wird nun erfindungsgemäss direkt ohne Abkühlung und Erstarrung in ein geschäumtes Produkt 11 überführt. Dazu wird die flüssige Schlacke 2 über eine nicht gezeigte Beschickungsvorrichtung dem ausgemauerten Drehrohrofen 1 zugeführt. Die Beschickung kann sowohl kontinuierlich als auch zeitlich schwankend durchgeführt werden.

Die Temperatur der Schlacke 2 wird dabei so gewählt, das eine optimale Viskosität der Schlacke 2 für den nachfolgenden Aufschäumprozess erhalten wird. Am der Materialaufgabe entgegengesetzten Ende des Drehrohrofens 2 wird pulverförmiges Blähmittel 3, in diesem Falle Calciumcarbonat, mit einer Korngrösse kleiner 1 mm über die Lanze 5 in den Drehrohrofen 2 transportiert und über die Kanäle 10 oberflächlich verteilt. Das pulverförmige Blähmittel 3 wird dabei mittels eines Transportgases, z. B. Luft oder Stickstoff, zugeführt und dosiert. Dadurch kann es besonders fein verteilt werden.

Auch die Beschickung mit Blähmittel 3 kann wie die Beschickung mit flüssiger Schlacke 2 entweder kontinuierlich oder diskontinuierlich erfolgen. Das Blähmittel 3 wird mittels der Lanze 5 auf einer bestimmten Länge des Drehrohres 2 an der Wand des Drehrohres 2 verteilt und zwar unmittelbar an der Stelle, an der die Wand der Drehung des Drehrohres 2 unter das flüssige Schlackebad gezogen wird.

Es erfolgt nun eine intensive Vermischung der geschmolzenen Schlacke 2 mit dem fein verteilten Blähmittel 3, im vorliegenden Beispiel Calciumcarbonat. Das Calciumcarbonat zersetzt sich unter Freisetzung von CO₂, es entstehen feinste homogen verteilte geschlossene Bläschen innerhalb der Schlacke, die nach Austrag aus dem Drehrohrofen 2, Abkühlung und Erstarrung im geschäumten Produkt 11 erhalten bleiben. Die aufgeschäumte Schlacke kann entweder kontinuierlich oder durch zeitweises Kippen des Drehrohres 2 batchweise aus dem Drehrohrofen 2 abgezogen werden.

Gut geeignet als Blähmittel 3 sind auch Kohlenstoff oder andere Kohlenstoff enthaltende Substanzen. Besonders gut als Blähmittel 3 sind CO₂ freisetzende Substanzen geeignet, wie Calciumcarbonat, Magnesiumcarbonat und Dolomit.

In einen anderen Ausführungsbeispiel ist es auch möglich, das Blähmittel 3 anstelle auf die Drehrohrwand direkt auf die Oberfläche der flüssigen Schlacke zu geben.

Die Vorteile der Erfindung bestehen darin, dass das aufgeschäumte Produkt als Bau- und Isolationsstoff eingesetzt werden kann, weil es auf Grund der geschlossenen Poren eine gute Qualität aufweist. Das Verfahren ist ausserdem einfach und kostengünstig zu realisieren, ein technisch mit vertretbarem Aufwand nicht zu realisierendes Einrühren des pulverförmigen Blähmittels in das schmelzflüssige Material mittels mechanischer Rührvorrichtungen entfällt.

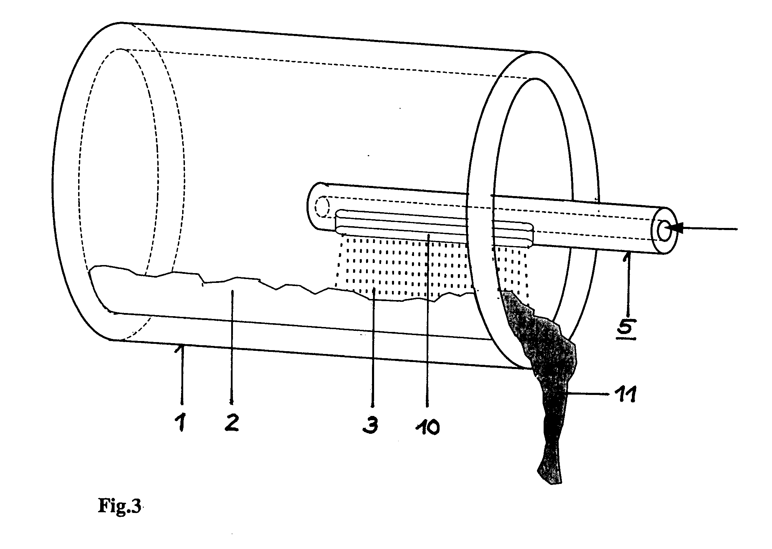

Fig. 3 zeigt eine schematische perspektivische Darstellung eines Drehrohres 1 mit einer zweiten Ausführungsvariante der erfindungsgemässen Vorrichtung 5. Bei diesem Ausführungsbeispiel soll anstelle von flüssiger Schlacke flüssiges Glas aufgeschäumt werden. Im Unterschied zu dem in den Fig. 1 und 2 zeigten Ausführungsbeispiel wird eine Lanze 5 zur Zufuhr des Blähmittel 3 verwendet, welche einen Längsschlitz als Austrittskanal 10 aufweist. Das Blähmittel 3 wird zusammen mit dem Transportgas direkt auf der Oberfläche des geschmolzenen Glases 2 verteilt. Auch hier wird durch die Rotation des Drehrohrofens 2 das Blähmittel 3 unter das flüssige Glas 2 gezogen und dabei Gas freigesetzt, wodurch fein verteilte geschlossene Poren erzeugt und das Glas aufgeschäumt wird. Selbstverständlich kann anstelle von flüssigem Glas auch flüssige Schlacke verwendet werden.

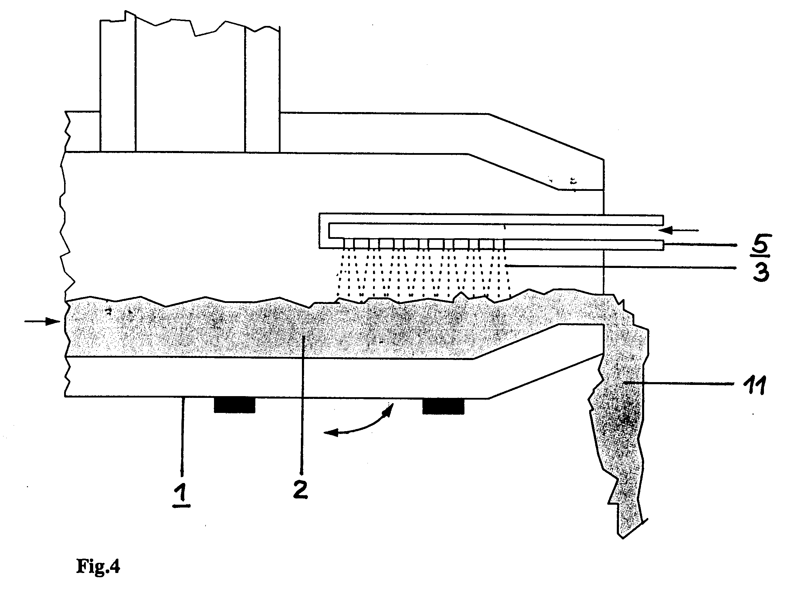

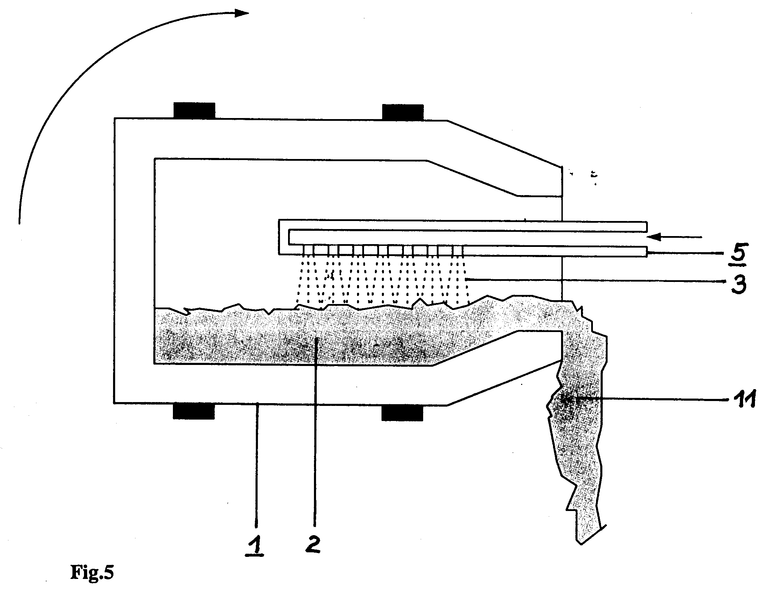

Weitere Ausführungsbeispiele sind in Fig. 4 und 5 dargestellt. Fig. 4 zeigt eine schematische Darstellung eines Schwenktrommelofens in einer dritten Ausführungsvariante der Erfindung. Im Unterschied zu den in den Fig. 1 bis 3 gezeigten Ausführungsbeispielen wird das Behandlungsgefäss 1, d. h. der Schwenktrommelofen nicht vollständig gedreht, sondern nur hin- und hergeschwenkt. Die Blähmittel-Zuführungslanze 5 wird dabei entweder so mitgedreht, dass jeweils an der Stelle, an der die Wand infolge der Drehung unter das Schlackenbad gezogen wird, das Blähmittel 3 aufgetragen wird, oder die Zuführungslanze 5 kann in einem anderen Falle nicht drehbar montiert sein, so dass das aufgetragenen Blähmittel 3 jeweils wechselseitig auf der einen oder der anderen Seite unter die flüssige Schlacke 2 gezogen wird.

Fig. 5 zeigt eine schematische Darstellung eines Konverters in einer weiteren Ausführungsvariante der Erfindung. Der als Behandlungsgefäss 1 dienende Konverter ist, wie mit dem linken Pfeil in Fig. 5 angedeutet, schwenkbar. Die aufgeschäumte Schlacke 11 wird hier entweder kontinuierlich durch Überlaufen oder diskontinuierlich durch Schwenken des Konverters abgezogen.

### Bezugszeichenliste

- 1: Behandlungsgefäss (Drehrohrofen, Schwenktrommelofen, Konverter)
- 2: geschmolzenes Material (Schlacke, Glas)
- 3: Blähmittel
- 4: Längsachse des Drehrohrofens
- 5: Vorrichtung zur Zufuhr von Pos. 3, Lanze
- 6: Aussenwand von Pos. 5
- 7: Innenwand von Pos. 5
- 8: Kühlkanal
- 9: Zufuhrkanal für Blähmittel-/Transportgasgemisch
- 10: Austrittskanal für Blähmittel-/Transportgasgemisch
- 11: geschäumtes Produkt

## Patentansprüche

1. Verfahren zum Schäumen von Material (2), insbesondere Schlacke oder Glas, bei welchem das Material (2) direkt im geschmolzenen Zustand unter Verwendung eines Blähmittels (3) aufgeschäumt wird, dadurch gekennzeichnet, dass
a) das geschmolzenes Material (2) einem dreh- und/oder schwenkbaren Behandlungsgefäss (1) zugeführt wird,
b) dass dem Behandlungsgefäss (1) ein pulverförmiges Blähmittel (3) zugeführt und dieses oberflächlich verteilt wird,
c) dass das geschmolzene Material (2) und das Blähmittel (3) durch Bewegung des Behandlungsgefässes (1) intensiv miteinander vermischt werden und das Material (2) infolge Gasentwicklung aufgeschäumt wird und
d) dass anschliessend das aufgeschäumte Produkt (11) aus dem Behandlungsgefäss (1) ausgetragen und abgekühlt wird.

2. Verfahren nach Anspruch 1, dadurch gekennzeichnet, dass das Blähmittel (3) über eine bestimmte axiale und/oder radiale Distanz auf der Oberfläche des flüssigen Materials (2) verteilt wird.

3. Verfahren nach Anspruch 1, dadurch gekennzeichnet, dass das Blähmittel (3) über eine bestimmte axiale und radiale Distanz auf der Oberfläche der Wand des Behandlungsgefässes (1) verteilt wird.

4. Verfahren nach einem der Ansprüche 1 bis 3, dadurch gekennzeichnet, dass das Blähmittel (3) mittels eines Transportgases dem Behandlungsgefäss (1) zugeführt wird.

5. Verfahren nach einem der Ansprüche 1 bis 4, dadurch gekennzeichnet, dass das Blähmittel (3) nach seiner oberflächlichen Verteilung im Behandlungsgefäss (1) durch Rotation oder Schwenkung des Behandlungsgefässes (1) unter das flüssige Material (2) gezogen wird und dabei Gas freigesetzt wird.

6. Verfahren nach einem der Ansprüche 1 bis 5, dadurch gekennzeichnet, dass als Blähmittel (3) Kohlenstoff eingesetzt wird.

7. Verfahren nach einem der Ansprüche 1 bis 5, dadurch gekennzeichnet, dass als Blähmittel (3) eine Kohlenstoff enthaltende Substanz eingesetzt wird.

8. Verfahren nach Anspruch 1 bis 5, dadurch gekennzeichnet, dass als Blähmittel (3) eine CO₂ freisetzende Substanz, vorzugsweise Calciumcarbonat, Dolomit und/oder Magnesiumcarbonat, eingesetzt wird.

9. Verfahren nach einem der Ansprüche 1 bis 8, dadurch gekennzeichnet, dass als Behandlungsgefäss (1) ein Drehrohrofen verwendet wird.

10. Verfahren nach einem der Ansprüche 1 bis 9, dadurch gekennzeichnet, dass als Behandlungsgefäss (1) eine Schwenktrommel verwendet wird.

11. Verfahren nach einem der Ansprüche 1 bis 10, dadurch gekennzeichnet, dass als Behandlungsgefäss (1) ein Konverter verwendet wird.

12. Vorrichtung zur Zufuhr von Blähmittel (3) zur Durchführung des Verfahrens nach einem der Ansprüche 1 bis 11, dadurch gekennzeichnet, dass die Vorrichtung (5) lanzenförmig ausgebildet ist, dass die Lanze (5) eine Aussenwand (6) und eine von dieser Aussenwand (6) beabstandete Innenwand (7) aufweist, wobei die Aussenwand (6) und die Innenwand (7) einen Kühlkanal (8) für ein darin strömendes Kühlmittel begrenzen, und die Innenwand (7) einen Zufuhrkanal (9) für das Blähmittel (3) umschliesst, und dass mindestens ein sich von der Innenwand (7) zur Aussenwand (6) erstreckender Austrittskanal (10) für das Blähmittel (3) vorgesehen ist.

13. Vorrichtung nach Anspruch 12, dadurch gekennzeichnet, dass der Austrittskanal (10) ein sich in Längsrichtung der Lanze (5) erstreckender Schlitz ist.

14. Vorrichtung nach Anspruch 12, dadurch gekennzeichnet, dass als Austrittskanal (10) eine Mehrzahl von in Längsrichtung der Lanze (5) nacheinander angeordneten Röhrchen vorgesehen ist.
